# EUROPEAN PATENT APPLICATION

(11) **EP 3 916 205 A2**
(43) Date of publication of application: **01.12.2021**
(21) Application number: 21177173.8
(22) Date of filing: 17.01.2013
(51) Int. Cl.: F01D 25/16, F02K 3/06, F02C 3/107, F02K 3/072, F02C 7/20

(54) **GEARED TURBOFAN ENGINE WITH COUNTER-ROTATING SHAFTS**

(30) Priority: 29.02.2012 US 201213407795
(62) Divisional of application: 13754324.5
(71) Applicant: Raytheon Technologies Corporation, Farmington, CT 06032 (US)
(72) Inventor: SCHWARZ, Frederick M., Glastonbury, CT 06033 (US); SUCIU, Gabriel L., Glastonbury, CT 06033 (US); KUPRATIS, Daniel Bernard, Wallingford, CT 06492 (US)
(74) Representative: Dehns

(57) **Abstract**

A mid-turbine frame (142) is incorporated into a turbine section of a gas turbine engine (20) intermediate a high pressure turbine (130) and a low pressure turbine (134). The high pressure (130) and low pressure turbines (134) rotate in opposite directions. A plurality of vanes (158) redirect the flow downstream of the high pressure turbine (130) as it approaches the low pressure turbine (134).

## Description

### CROSS-REFERENCE TO RELATED APPLICATION

This application is a continuation-in-part of pending United States Patent Application Serial No. 13/365,288, filed on February 3, 2012, and entitled "GEARED TURBOFAN ENGINE WITH COUNTER-ROTATING SHAFTS," which claims priority to United States Provisional Patent Application No. 61/592,879 filed January 31, 2012.

### BACKGROUND OF THE INVENTION

This application relates to a geared turbofan gas turbine engine, wherein the low and high pressure spools counter-rotate relative to each other.

Gas turbine engines are known, and typically include a fan delivering air into a compressor section, and outwardly as bypass air to provide propulsion. The air in the compressor is delivered into a combustion section where it is mixed with fuel and burned. Products of this combustion pass downstream over turbine rotors, driving them to rotate. Typically there are low and high pressure compressors, and low and high pressure turbines.

The high pressure turbine typically drives the high pressure compressor as a high spool, and the low pressure turbine drives the low pressure compressor and the fan. Historically, the fan and low pressure compressor were driven at a common speed.

More recently, a gear reduction has been provided on the low pressure spool such that the fan and low pressure compressor can rotate at different speeds. It desirable to have more efficient engines that have more compact turbines to limit efficiency loses.

### SUMMARY

In a featured embodiment, a gas turbine engine has a fan for delivering air into a low pressure compressor and into a bypass duct. There is a low pressure compressor, a high pressure compressor, a combustion section, a high pressure turbine, and a low pressure turbine. The high pressure turbine is configured to rotate in a first direction about a central axis with the high pressure compressor as a high pressure spool. The low pressure turbine is configured to rotate in a second direction, opposed to the first direction, about the central axis with the low pressure compressor as a low pressure spool. The fan is driven by the low pressure turbine through a speed reduction mechanism, such that the fan and low pressure compressor rotate at different speeds. A mid-turbine frame includes a first bearing supporting the high pressure turbine relative to an outer core housing of the gas turbine engine. The mid-turbine frame includes a strut supporting the first bearing at a location intermediate a downstream end of the high pressure turbine and an upstream end of the low pressure turbine. A plurality of vanes are positioned upstream of a first stage of the low pressure turbine. The plurality of vanes are separated from the mid-turbine frame.

In another embodiment according to the previous embodiment, the high pressure spool is also supported at an upstream end of the high pressure compressor by a second bearing, and supported relative to the outer housing through a second strut in a straddle-mounted arrangement.

In another embodiment according to the previous embodiments, the engine has a power density that is greater than or equal to about 1.5 and less than or equal to about 5.5 lbf/ cubic inches.

In another embodiment according to the previous embodiments, the power density is greater than or equal to about 4.0.

In another embodiment according to the previous embodiments, the power density is calculated with a thrust gravity that is sea level take-off, flat-rated static thrust.

In another embodiment according to the previous embodiments, the fan has a bypass ratio greater than 6.

In another embodiment according to the previous embodiments, the fan rotates in the first direction.

In another embodiment according to the previous embodiments, the fan rotates in the second direction.

In another featured embodiment, a gas turbine engine turbine has a high pressure turbine configured to rotate with a high pressure compressor as a high pressure spool in a first direction about a central axis. A low pressure turbine is configured to rotate with a low pressure compressor as a low pressure spool in a second direction about the central axis. The high pressure spool operates with gases at a higher pressure than the low pressure spool. The high pressure spool rotates at a higher speed than the low pressure spool. A mid-turbine frame supports the high pressure turbine. The mid-turbine frame includes a first bearing supporting the high pressure turbine, and a strut supporting the first bearing at a location between the high pressure turbine and the low pressure turbine. A plurality of vanes are associated with a first stage of the low pressure turbine.

In another embodiment according to the previous embodiments, the plurality of vanes are incorporated into the mid-turbine frame.

In another embodiment according to the previous embodiments, the plurality of vanes are mounted separately from the mid-turbine frame.

In another embodiment according to the previous embodiments, a fan is connected to the low pressure spool via a speed changing mechanism.

In another embodiment according to the previous embodiments, the fan rotates in the first direction.

In another embodiment according to the previous embodiments, the fan rotates in the second direction.

In another embodiment according to the previous embodiments, the engine includes a power density that is greater than or equal to about 1.5 and less than or equal to about 5.5 lbf/ cubic inches.

In another embodiment according to the previous embodiments, the power density is greater than or equal to about 4.0.

In another embodiment according to the previous embodiments, the power density is calculated with a thrust gravity that is sea level take-off, flat-rated static thrust.

In another embodiment according to the previous embodiments, the high pressure spool is also supported at the high pressure compressor by a thrust bearing relative to the outer housing through a second strut creating a straddle-mounted arrangement of the spool.

In another embodiment according to the previous embodiments, a nut secures a plurality of struts from said outer core housing.

In another embodiment according to the previous embodiments, the plurality of vanes are configured in a single row.

These and other features may be best understood from the following drawings and specification.

### BRIEF DESCRIPTION OF THE DRAWINGS

Figure 1 schematically shows a gas turbine engine.
Figure 2 schematically shows rotational features of one type of such an engine.
Figure 3 is a detail of a strut incorporated into the Figure 2 engine.
Figure 4 is a detail of the turbine section volume.
Figure 5 schematically shows a second embodiment.

### DETAILED DESCRIPTION

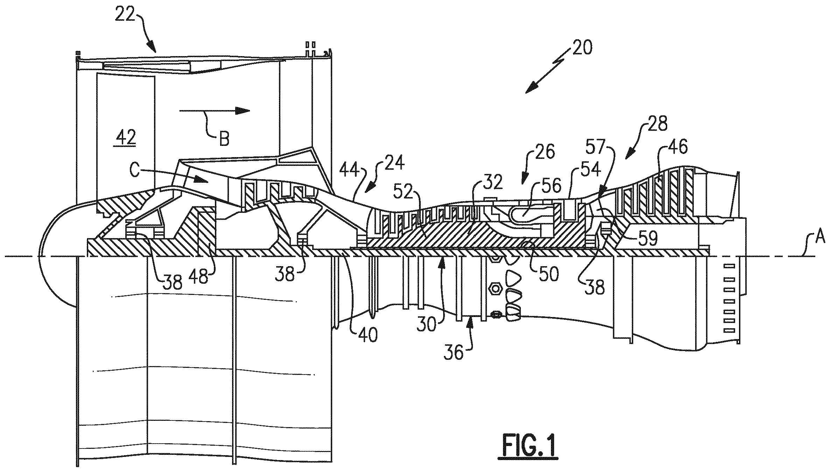

Figure 1 schematically illustrates a gas turbine engine 20. The gas turbine engine 20 is disclosed herein as a two-spool turbofan that generally incorporates a fan section 22, a compressor section 24, a combustor section 26 and a turbine section 28. Alternative engines might include, for example, three-spools, an augmentor section, or a different arrangement of sections, among other systems or features. The fan section 22 drives air along a bypass flowpath while the compressor section 24 drives air along a core flowpath for compression and communication into the combustor section 26 then expansion through the turbine section 28. Although depicted as a turbofan gas turbine engine in the disclosed non-limiting embodiment, it should be understood that the concepts described herein are not limited to use with turbofans as the teachings may be applied to other types of turbine engines.

The engine 20 generally includes a low speed spool 30 and a high speed spool 32 mounted for rotation about an engine central longitudinal axis A relative to an engine static structure 36 via several bearing systems 38. The low speed spool and the high speed spool might both rotate at relatively high speeds, and see high pressure. However, the low speed spool operates at lower pressure and at lower speeds than does the high speed spool. It should be understood that various bearing systems 38 at various locations may alternatively or additionally be provided.

The low speed spool 30 generally includes an inner shaft 40 that interconnects a fan 42, a low pressure compressor 44 and a low pressure turbine 46. The inner shaft 40 is connected to the fan 42 through a geared architecture 48 to drive the fan 42 at a lower speed than the low speed spool 30. The high speed spool 32 includes an outer shaft 50 that interconnects a high pressure compressor 52 and high pressure turbine 54. A combustor 56 is arranged between the high pressure compressor 52 and the high pressure turbine 54. A mid-turbine frame 57 of the engine static structure 36 is arranged generally between the high pressure turbine 54 and the low pressure turbine 46. The mid-turbine frame 57 further supports bearing systems 38 in the turbine section 28. The inner shaft 40 and the outer shaft 50 are concentric and rotate via bearing systems 38 about the engine central longitudinal axis A which is collinear with their longitudinal axes.

The core airflow C is compressed by the low pressure compressor 44 then the high pressure compressor 52, mixed and burned with fuel in the combustor 56, then expanded over the high pressure turbine 54 and low pressure turbine 46. The mid-turbine frame 57 includes true airfoils 59 which are in the core airflow path and act as inlet stator vanes to turn the flow to properly feed the first blades of the Low Pressure Turbine. The turbines 46, 54 rotationally drive the respective low speed spool 30 and high speed spool 32 in response to the expansion.

The engine 20 has bypass airflow B, and in one example is a high-bypass geared aircraft engine. The bypass ratio may be defined as the amount of air delivered into the bypass duct divided by the amount delivered into the core flow. In a further example, the engine 20 bypass ratio is greater than about six, with an example embodiment being greater than ten, the geared architecture 48 is an epicyclic gear train, such as a planetary gear system or a star gear system, or other gear system, with a gear reduction ratio of greater than about 2.3 and the low pressure turbine 46 has a pressure ratio that is greater than about 5. In one disclosed embodiment, the engine 20 bypass ratio is greater than about ten, the fan diameter is significantly larger than that of the low pressure compressor 44, and the low pressure turbine 46 and the Low Pressure Turbine has a pressure ratio that is greater than about 5:1. Low pressure turbine 46 pressure ratio is the total pressure measured prior to inlet of low pressure turbine 46 as related to the pressure at the outlet of the low pressure turbine 46 prior to an exhaust nozzle. The geared architecture 48 may be an epicycle gear train, such as a planetary gear system, a star gear system, or other gear system, with a gear reduction ratio of greater than about 2.5:1. It should be understood, however, that the above parameters are only exemplary of one embodiment of a geared architecture engine and that the present invention is applicable to other gas turbine engines including direct drive turbofans.

A greatest amount of thrust is provided by the bypass flow B due to the high bypass ratio. The fan section 22 of the engine 20 is designed for a particular flight conditiontypically cruise at about 0.8 Mach and about 35,000 feet (10668 m). The flight condition of 0.8 Mach and 35,000 ft (10668 m), with the engine at its best fuel consumption - also known as "bucket cruise Thrust Specific Fuel Consumption ('TSFC')" - is the industry standard parameter of lbm of fuel being burned per hour divided by lbf of thrust the engine produces at that minimum point. "Low fan pressure ratio" is the pressure ratio across the fan blade alone, before the Fan Exit Guide Vane ("FEGV") system. The low fan pressure ratio as disclosed herein according to one non-limiting embodiment is less than about 1.45. "Low corrected fan tip speed" is the actual fan tip speed in ft/sec divided by an industry standard temperature correction of [(Tram deg R) / 518.7)^0.5] (where deg R = 9/5 x K). The "Low corrected fan tip speed" as disclosed herein according to one non-limiting embodiment is less than about 1150 ft / second (350.5 m/s) at the same cruise point.

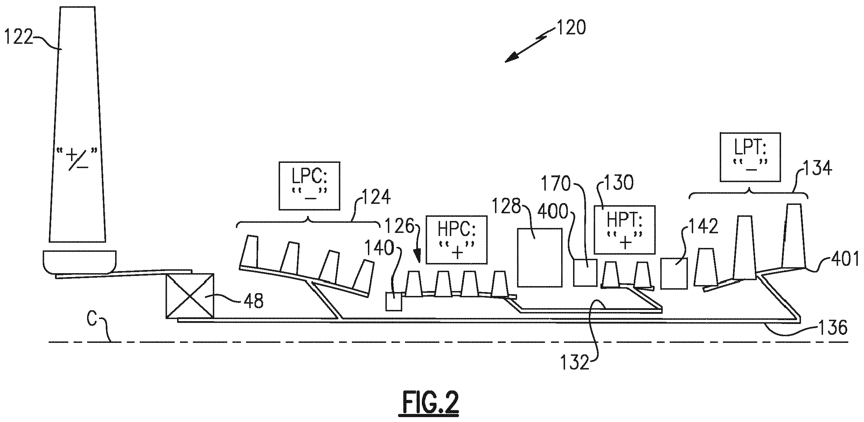

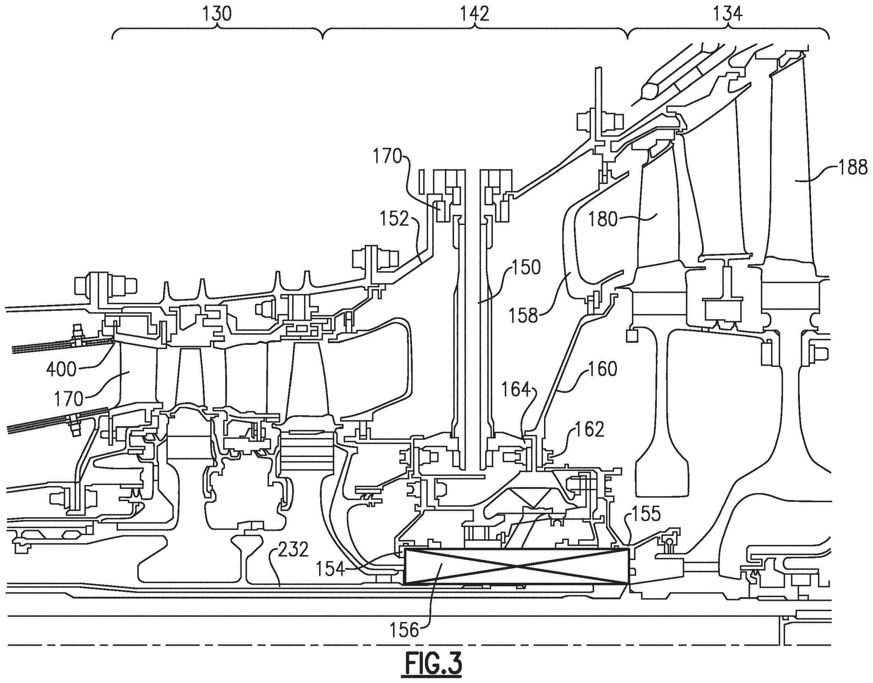

Figure 2 shows detail of an engine 120, which may generally have the features of engine 20 of Figure 1. A fan 122 is positioned upstream of a low pressure compressor 124, which is upstream of a high pressure compressor 126. A combustor 128 is positioned downstream of the high pressure compressor. Figure 1 shows that first strut 57 mounts a bearing 38 to support a high pressure turbine 54. Figure 2 shows a mid-turbine frame 142 which incorporates an air turning vane 158 (see Figure 3) positioned at a downstream end of the high pressure turbine 130, and which incorporates a strut 150 that supports a bearing 156 to support the aft end of the high pressure turbine 130, and a high pressure spool 132. A low pressure turbine 134 is positioned downstream of a mid-turbine frame 142. A low spool 136 drives the low pressure compressor 124 by the low pressure turbine 134. The speed change mechanism 48 causes the fan 122 to rotate at a different speed than the low pressure compressor 134. In embodiments of this invention, the speed input to output ratio for the speed change mechanism is above or equal to 2.0:1, and up to less than or equal to 13:1. The gear also causes fan 122 to rotate in an opposed direction relative to the low pressure compressor 124. In this embodiment the fan generally has less than 26 blades, and the low pressure turbine has at least three stages, and up to six stages. The high pressure turbine generally has one or two stages as shown.

As can appreciated from Figure 2, the fan may also rotate in the same direction as the low pressure compressor 124. When it is desired to have the fan rotate in the opposed direction to the low pressure compressor, then a star gear system may be preferred, while a planetary gear system may be preferred when it is desired to have the fan rotate in the same direction. A worker of ordinary skill in the mechanical arts would recognize how to achieve the proper direction of rotation utilizing known gear reduction systems.

As can appreciated from Figure 2, the fan may also rotate in the same direction as the high pressure compressor 126. In this particular embodiment, the low pressure compressor 124 and the low pressure turbine 134 rotate in one direction while the high pressure turbine 130 and the high pressure compressor 126 rotate in an opposed direction.

With such an arrangement, it is necessary to redirect the flow downstream of the high pressure turbine 134 approaching the first stage of the low pressure turbine 134.

Figure 3 shows a specific embodiment of a mid-turbine frame 142 of an engine 120 Figure 2. As shown, an outer housing 152 of the core engine mounts a strut 150 through a press nut 170. It should be understood these are plural, circumferentially spaced struts 150. The strut 150 extends inwardly to support structure 154 and 155, which support a bearing 156. As shown, the high shaft 232 is also supported on another bearing by a strut 140 at the front of the high pressure compressor 126. The strut and bearing at 140 may combine to hold the net rotor axial loads generated by the High Compressor and the High Turbine and be a thrust bearing. The combination of the strut and bearing at 140 and the strut and bearing at 142 combine to hold the high spool in a so-called "straddle-mounted" fashion where the high spool is simply supported between these two structures.

A vane 158 is positioned to be upstream of the first stage of the low pressure turbine 134. While a single vane 158 is illustrated, it should be understood these would be plural vanes 158 spaced circumferentially. The vane redirects the flow downstream of the high pressure turbine 130 as it approaches the first stage of the low pressure turbine 134. As can be appreciated, since the two turbine sections 130 and 134 are rotating in opposed directions, it is desirable from a LPT efficiency standpoint to have this flow precisely redirected by a true airfoil, rather than merely a streamlined shape. Therefore a section through the mid-turbine frame 142 would have the shape of an air-turning airfoil with camber and there is no other airfoil present to align the airflow properly into the low pressure turbine 134.

As shown in this embodiment, the vane 158 is incorporated into the mid-turbine frame 142. As shown, a leg 160 extends radially inwardly and is bolted at 162 to a portion 164 of the mid-turbine frame 142. A radially inner end of leg 160 is radially outward of bearing 156.

By incorporating a true air-turning vane 158 into the mid-turbine frame 142, rather than a streamlined strut and an additional stator vane row aft of the strut, the overall length and volume of the combined turbine sections are reduced because the vane 158 serves three functions: that of streamlining support strut 150, protecting the strut and any oil tubes servicing the bearing from exposure to heat and thirdly, turning the flow precisely into the LPT 134 such that it enters the rotating blade 180 at the correct flow angle. Further, by incorporating these features together, the overall assembly and arrangement of the turbine sections are also further reduced in volume.

Given the above features that achieve a more compact turbine section volume relative to the prior art, including both the high and low pressure turbines, a range of materials can be selected. As one example, by varying the materials for forming the low pressure turbine, the volume can be reduced through the use of more expensive and more exotic engineered materials, or alternatively, lower priced materials can be utilized. In three exemplary embodiments the first rotating blade of the Low Pressure Turbine can be a directionally solidified casting blade, a single crystal casting blade or a hollow, internally cooled blade. All three embodiments will change the turbine volume to be dramatically smaller than the prior art by enabling an increase of the low pressure turbine speed.

A turbine section power density may be defined as engine thrust in pounds force produced divided by the volume of the entire turbine section (130, 142, through 134). The volume of the turbine section may be defined by an inlet of a first turbine vane in the high pressure turbine to the exit of the last rotating airfoil in the low pressure turbine, and may be expressed in cubic inches. The static thrust at the engine's flat rated Sea Level Takeoff condition divided by a turbine section volume is defined as power density. The sea level take-off flat-rated static thrust may be defined in lbs force , while the volume may be the volume from the annular inlet of the first turbine vane 170 in the high pressure turbine to the annular exit of the downstream end of the last rotor blade 188 in the low pressure turbine. The maximum thrust may be Sea Level Takeoff Thrust "SLTO thrust" which is commonly defined as the flat-rated static thrust produced by the turbofan at sea-level.

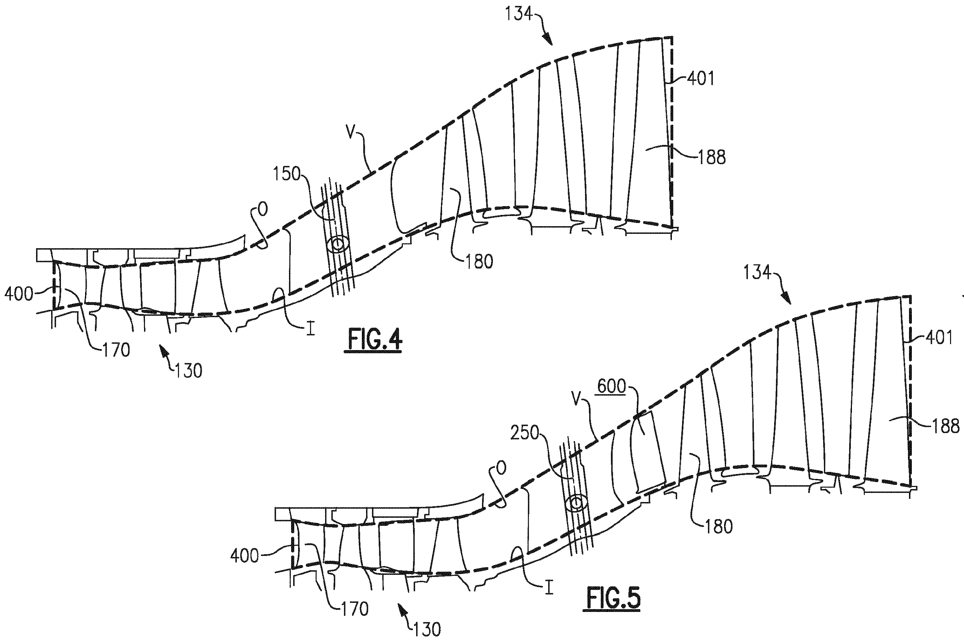

The volume V of the turbine section (130, 142, through 134) may be best understood from Figure 4. As shown, the strut 150 is intermediate the high pressure turbine section 130, and the low pressure turbine section 134. The volume V is illustrated by dashed line, and extends from an inner periphery I to an outer periphery O. The inner periphery generally is defined by the flowpath inner diameter of the blades, and the inner platform of the vanes. The outer periphery generally is defined by the flowpath outer diameter of the stator vanes and blade outer air seal (BOA) structures. The volume extends from a most upstream end 400 of the vane 170, typically its leading edge, and to the most downstream edge 401 of the last rotating blade 188 in the low pressure turbine section 134.

The power density in the disclosed gas turbine engine is much higher than in the prior art. Eight exemplary engines are shown below which incorporate turbine sections and overall engine drive systems and architectures as set forth in this application, and can be found in Table I as follows (where 1 lbf = 4.448 N, 1 inch = 2.54 cm and 1 lbf/in³ = 271.4 kN/m³):

**TABLE 1**

| Engine | Thrust SLTO (lbf) | Turbine section volume from the Inlet | Thrust/turbine section volume (lbf / in³) |
|---|---|---|---|
| 1 | 17,000 | 3,859 | 4.4 |
| 2 | 23,300 | 5,330 | 4.37 |
| 3 | 29,500 | 6,745 | 4.37 |
| 4 | 33,000 | 6,745 | 4.84 |
| 5 | 96,500 | 31,086 | 3.1 |
| 6 | 96,500 | 62,172 | 1.55 |
| 7 | 96,500 | 46,629 | 2.07 |
| 8 | 37,098 | 6,745 | 5.50 |

Thus, in embodiments, the power density would be greater than or equal to about 1.5 lbf / in³ (407.1 kN/m³). More narrowly, the power density would be greater than or equal to about 2.0 lbf / in³ (542.9 kN/m³).

Even more narrowly, the power density would be greater than or equal to about 3.0 lbf / in³ (814.3 kN/m³).

More narrowly, the power density is greater than or equal to about 4.0 lbf / in³ (1086 kN/m³).

Also, in embodiments, the power density is less than or equal to about 5.5 lbf / in³ (1493 kN/m³).

Figure 5 shows an embodiment which may incorporate the power density features as set forth above. The vane 600 leading into the low pressure turbine is formed separately from the mid-turbine strut 250. The vanes in either embodiment are responsible to redirect the flow downstream of the high pressure turbine as it enters the low pressure turbine. Particularly when there are fewer stages of the low pressure turbine, it is important that the flow be efficiently and properly directed when it approaches the very first stage such that all of the stages of the low pressure turbine achieve adequate efficiency. The redirection of the flow between the two sections will result in a vortex from the swirling of the flow. Particularly in larger turbine sections this vortex may be more aggressive, and it may be desirable to utilize this separate vane embodiment for such systems. Between the Figure 3 embodiment and the Figure 5 embodiment the designer of the turbine section is provided with two efficient options.

Engines made with the disclosed architecture, and including turbine sections as set forth in this application, and with modifications coming from the scope of the claims in this application, thus provide very high efficient operation, and increased fuel efficiency and lightweight relative to their trust capability.

Although embodiments of this invention have been disclosed, a person of ordinary skill in this art would recognize that certain modifications would come within the scope of this application. For that reason, the following claims should be studied to determine the true scope and content of this invention.

## Claims

1. A gas turbine engine (120) comprising:
a fan (122) for delivering air into a low pressure compressor (124), and into a bypass duct;
a low pressure compressor (124), a high pressure compressor (126), a combustion section, a high pressure turbine (130), and a low pressure turbine (134);
said high pressure turbine (130) configured to rotate in a first direction about a central axis (C) with said high pressure compressor (126) as a high pressure spool (132), said low pressure turbine (134) configured to rotate in a second direction, opposed to said first direction, about said central axis (C) with said low pressure compressor (124) as a low pressure spool (136);
said fan (122) being driven by said low pressure turbine (134) through a speed reduction mechanism (48), and such that said fan (122) and said low pressure compressor (124) rotate at different speeds;
a mid-turbine frame (142) for said high pressure turbine (130), said mid-turbine frame (130) including a first bearing (156) supporting said high pressure turbine (130) relative to an outer core housing (152) of the gas turbine engine (120), said mid-turbine frame (142) including a strut (150) supporting said first bearing (156) at a location intermediate a downstream end of said high pressure turbine (130) and an upstream end of said low pressure turbine (134); and
a plurality of vanes (158) positioned upstream of a first stage (180) of said low pressure turbine (134), and said plurality of vanes (158) being separated from said mid-turbine frame (142).

2. The gas turbine engine as set forth in claim 1, wherein said high pressure spool (132) is also supported at an upstream end of the high pressure compressor (126) by a second bearing, and supported relative to the outer housing (152) through a second strut (140) in a straddle-mounted arrangement.

3. The gas turbine engine as set forth in claim 1 or 2, said fan (122) having a bypass ratio greater than 6.

4. The gas turbine engine as set forth in claim 1, 2 or 3, wherein said fan (122) rotates in said first direction.

5. The gas turbine engine as set forth in claim 1, 2 or 3, wherein said fan (122) rotates in said second direction.

6. A gas turbine engine (120) comprising:
a high pressure turbine (130) configured to rotate with a high pressure compressor (126) as a high pressure spool (132) in a first direction about a central axis (C);
a low pressure turbine (134) configured to rotate with a low pressure compressor (124) as a low pressure spool (136) in a second direction about said central axis (C), said high pressure spool (132) operating with gases at a higher pressure than said low pressure spool (136), and said high pressure spool (132) rotating at a higher speed than said low pressure spool (136);
a mid-turbine frame (142) for supporting said high pressure turbine (134), said mid-turbine frame (142) including a first bearing (156) supporting said high pressure turbine (130), and a strut (150) supporting said first bearing (156) at a location between said high pressure turbine (130) and said low pressure turbine (134); and
a plurality of vanes (158) associated with a first stage (180) of said low pressure turbine (134).

7. The gas turbine engine as set forth in claim 6, wherein said plurality of vanes (158) are incorporated into said mid-turbine frame (142).

8. The gas turbine engine as set forth in claim 6, wherein said plurality of vanes (158) are mounted separately from said mid-turbine frame (142).

9. The gas turbine engine as set forth in claim 6, 7 or 8, wherein a fan (122) is connected to the low pressure spool (136) via a speed changing mechanism (48).

10. The gas turbine engine as set forth in claim 9, wherein said fan (122) rotates in said first direction.

11. The gas turbine engine as set forth in claim 9, wherein said fan (122) rotates in said second direction.

12. The gas turbine engine as set forth in any of claims 6 to 11, wherein said high pressure spool (132) is also supported at the high pressure compressor (126) by a thrust bearing, and supported relative to the outer housing (152) through a second strut (140) creating a straddle-mounted arrangement of the spool (132).

13. The gas turbine engine as set forth in any of claims 6 to 12, wherein a nut (170) secures a plurality of struts (150) from said outer core housing (152).

14. The gas turbine engine as set forth in any of claims 6 to 13, wherein said plurality of vanes (158) is configured in a single row.

15. The engine as set forth in any preceding claim, including a power density that is greater than or equal to about 1.5 lbf/in³ (407.1 kN/m³) and less than or equal to about 5.5 lbf/in³ (1493 kN/m³), wherein said power density is optionally greater than or equal to about 4.0 lbf/in³ (1086 kN/m³), and wherein said power density is optionally calculated with a thrust gravity that is sea level take-off, flat-rated static thrust.
